# EUROPEAN PATENT APPLICATION

(11) **EP 2 961 084 A2**
(43) Date of publication of application: **30.12.2015**
(21) Application number: 13806390.4
(22) Date of filing: 22.08.2013
(51) Int. Cl.: H04B 10/071

(54) **OTDR OPTICAL PATH DETECTION DEVICE AND METHOD**

(30) Priority: 25.02.2013 CN 201310059043
(71) Applicant: ZTE Corporation, Shenzhen, Guangdong 518057 (CN)
(72) Inventor: CHEN, Lei, Shenzhen Guangdong 518057 (CN); FU, Zhiming, Shenzhen Guangdong 518057 (CN); KUANG, Guohua, Shenzhen Guangdong 518057 (CN); BEI, Jinsong, Shenzhen Guangdong 518057 (CN); LI, Kun, Shenzhen Guangdong 518057 (CN); YU, Chendong, Shenzhen Guangdong 518057 (CN)
(74) Representative: Brevalex
(86) International application number: PCT/CN2013/082104
(87) International publication number: WO 2013/189417

(57) **Abstract**

The disclosure relates to an OTDR path detection device and method, and the device includes an optical input interface, an optical output interface, a test light transmission unit, an optical assembly, a test light reception unit, a data processing unit, a micro control unit, a power supply unit and a communication interface unit. In the disclosure, a detection light transmission function, a scattered light and reflected light reception function, a detected data processing function and a unit control function are integrated. A fiber optic network to be detected can be detected in real time through fixing the integral optical transmission/reception device in a fiber optic network to be detected, and the normal transmission of serving light is not affected, thus a specialized OTDR meter for fiber optic detection and related testing devices are no longer needed, thereby simplifying steps for optical fiber failure detection and lowering complexity of optical network maintenance and corresponding cost.

## Description

### TECHNICAL FIELD

The present disclosure relates to the technical field of optical communications, and in particular to an integrated optical transceiver OTDR optical path detection device, which has an Optical Time Domain Reflectometer (OTDR) function, and corresponding method.

### BACKGROUND

In optical communications, the transmission medium, i.e., optical fiber may inevitably have some link failures that affects transmission of optical signals. In order to position accurately a failure, a specialized OTDR is required to perform failure detection and positioning.

The OTDR is implemented based on backward Rayleigh scattering and Fresnel reflection during light transmission over an optical fiber, its operation principle is as below: a short pulsed light is emitted into an optical fiber, when the pulsed light is transmitted over the optical fiber, the pulsed light may experience scattering and reflection (e.g., Rayleigh scattering, Fresnel reflection) in the optical link, specifically, scattered light reflected back along a transmission path and reflected light will return to the OTDR, irregularity and defects in the optical path can be detected through detection of a time response of a backward scattered signal, thereby achieving accurate positioning of failure points.

With the large scale deployment of fiber optic communication networks, how to perform efficient and flexible detection and maintenance on fiber optic networks is a great challenge facing operators. A traditional external OTDR instrument is expensive and has a relatively large volume, and an optical fiber is required to be disconnected from a corresponding system before detection so that the position of a failure or broken point can be analyzed, thus the optical link cannot be detected in real time and normal transmission of serving light is affected. In addition, a detection networking scheme of the external OTDR instrument is complicated and also has high requirements on skills of maintenance personnel.

### SUMMARY

Embodiments of the disclosure are intended to provide an OTDR optical path detection device and method that can detect in real time a fiber optic network to be detected without affecting the normal transmission of serving lights, thereby lowering complexity and cost of maintaining an optical network.

In order to achieve the above objectives, an embodiment of the disclosure provides an OTDR optical path detection device, including an optical input interface, an optical output interface and an optical transceiver processing module, wherein
the optical input interface and the optical output interface are configured to fix the device in a serving fiber optic link to be detected, wherein the optical output interface is connected with one end of a serving fiber optic network to be detected; and
the optical transceiver processing module is configured to output, through the optical output interface, a test light signal to the serving fiber optic link to be detected; to receive, from the serving fiber optic link to be detected, a backward Rayleigh scattered light signal and a reflected light signal generated from the test light signal; and to process and analyze the backward Rayleigh scattered light signal and the reflected light signal so as to implement OTDR optical path detection.

In an embodiment, the optical transceiver processing module may include a test light transmission unit, an optical assembly, a test light reception unit and a data processing unit, wherein
the data processing unit is configured to generate a monopulse or pulse-sequence test electric signal;
the test light transmission unit is configured to convert the test electric signal to a test light signal having a constant optical power, and output the test light signal to the optical assembly;
the optical assembly is configured to, after combing the test light signal with a serving light received by the optical input interface, transmit them together on the serving fiber optic link to be detected via the optical output interface; and to receive, from the serving fiber optic link to be detected, the backward Rayleigh scattered light signal and the reflected light signal generated from the test light signal, and separate the backward Rayleigh scattered light signal and the reflected light signal from the serving light;
the test light reception unit is configured to receive, from the optical assembly, the backward Rayleigh scattered light signal and the reflected light signal, and convert received light signals to digital signals; and
the data processing unit is further configured to analyze the digital signals converted by the test light reception unit so as to implement OTDR optical path detection.

In an embodiment, a test monopulse or pulse-sequence light signal generated by the test light transmission unit may have a wavelength range from 1625 nm to 1675 nm.

In an embodiment, the way by which the data processing unit analyzes the digital signals processed by the test light reception unit may include at least an averaging algorithm and a sequence algorithm.

In an embodiment, the optical transceiver processing module may further include a micro control unit, a power supply unit and a communication interface unit, wherein
the micro control unit is configured to control operation of circuits of other units in the optical transceiver processing module;
the data processing unit is further configured to report an analysis result to a management system via the micro control unit and the communication interface unit; and
the power supply unit is configured to supply electricity to circuits of all units in the optical transceiver processing module.

In an embodiment, the device may be applied to a Passive Optical Network (PON), the optical input interface may be connected with an optical fiber of an output of an Optical Line Terminal (OLT) equipment, and the optical output interface may be connected with one end of the serving fiber optic network to be detected.

In an embodiment, the device may be applied to an Optical Transport Network (OTN), the optical input interface may be connected with an optical fiber of an output of an OTN equipment, and the optical output interface may be connected with one end of the serving fiber optic network to be detected.

An embodiment of the disclosure further provides an OTDR optical path detection method, including:
a test light signal is output to a serving fiber optic link to be detected;
a backward Rayleigh scattered light signal and a reflected light signal generated from the test light signal are received from the serving fiber optic link to be detected; and
the backward Rayleigh scattered light signal and the reflected light signal are processed and analyzed to implement OTDR optical path detection.

In an embodiment, the step that a test light signal is output to a serving fiber optic link to be detected may include:
a monopulse or pulse-sequence test electric signal generated;
the test electric signal is converted to a test light signal having a constant optical power, and the test light signal is output to an optical assembly that, after combing the test light signal with a serving light, transmits them together on the serving fiber optic link to be detected.

In an embodiment, the step that a backward Rayleigh scattered light signal and a reflected light signal generated from the test light signal are received from the serving fiber optic link to be detected may include:
the optical assembly receives, from the serving fiber optic link to be detected, the backward Rayleigh scattered light signal and the reflected light signal generated from the test light signal, and separates the backward Rayleigh scattered light signal and the reflected light signal from the serving light;

In an embodiment, the step that the backward Rayleigh scattered light signal and the reflected light signal are processed and analyzed so as to implement OTDR optical path detection may include:
the backward Rayleigh scattered light signal and the reflected light signal output from the optical assembly are converted to digital signals; and
the digital signals after the conversion are analyzed.

Preferably, the method may further include:
an analysis result is reported to a management system.

The OTDR optical path detection device and method provided by embodiments of the disclosure integrate a detection light transmission function, a scattered light and reflected light reception function, a detected data processing function and a unit control function. A fiber optic network to be detected can be detected in real time through fixing the integral optical transmission/reception device of an optical in a fiber optic network to be detected, and the normal transmission of serving light is not affected, thus a specialized OTDR instrument for fiber optic detection and related testing devices are no longer needed, thereby lowering complexity of optical network maintenance and corresponding cost.

### BRIEF DESCRIPTION OF THE DRAWINGS

Fig. 1 is a block diagram of an OTDR optical path detection device according to an embodiment of the disclosure;
Fig. 2 is a structural diagram of an OTDR optical path detection device, applied in a Passive Optical Network (PON), according to an embodiment of the disclosure;
Fig. 3 is a structural diagram of an OTDR optical path detection device, applied in an Optical Transport Network (PON), according to an embodiment of the disclosure;
Fig. 4 is a schematic circuit diagram of an OTDR optical path detection device according to an embodiment of the disclosure; and
Fig. 5 is a flow chart of an OTDR optical path detection method according to an embodiment of the disclosure.

### DETAILED DESCRIPTION

The main idea of the technical solutions in embodiments of the disclosure lies in: the OTDR technique is combined with an optical transport equipment to form an integral optical transmission/reception device dedicated to OTDR optical path detection, the device integrates a detection light transmission function, a scattered light and reflected light reception function, a detected data processing function and a unit control function, this solution will replace the existing solution based on an external OTDR meter, hold a measurement accuracy in the prior art to the most extent and overcome disadvantages of the external OTDR meter. The real-time detection of an optical link can be implemented by simply adding, to the exterior of an original optical transport equipment, an integral optical transmission/reception OTDR optical path detection device dedicated to OTDR optical path detection, thereby achieving high efficient detection and maintenance of plenty of optical fibers.

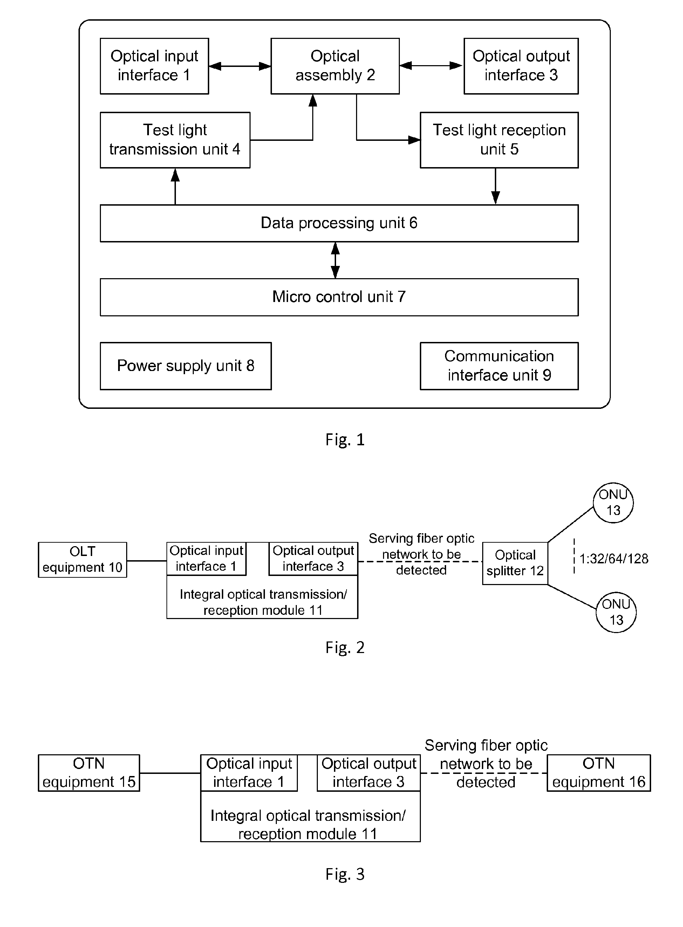

As shown in Fig. 1, an embodiment of the disclosure provides an OTDR optical path detection device that includes an optical input interface, an optical output interface and an optical transceiver processing module, wherein
the optical input interface 1 and the optical output interface 3 are configured to fix the device in a serving fiber optic link to be detected, wherein the optical output interface is connected with one end of a serving fiber optic network to be detected; and
the optical transceiver processing module is configured to output, through the optical output interface 3, a test light signal to the serving fiber optic link to be detected; to receive, from the serving fiber optic link to be detected, a backward Rayleigh scattered light signal and a reflected light signal generated from the test light signal; and to process and analyze the backward Rayleigh scattered light signal and the reflected light signal so as to implement OTDR optical path detection.

Specifically, the optical transceiver processing module includes a test light transmission unit 4, an optical assembly 2, a test light reception unit 5, a data processing unit 6, a micro control unit 7, a power supply unit 8 and a communication interface unit 9, wherein
the data processing unit 6 is configured to generate a monopulse or pulse-sequence test electric signal;
the test light transmission unit 4 is configured to convert the test electric signal to a test light signal having a constant optical power, and output the test light signal to the optical assembly 2;
the optical assembly 2 is configured to, after combing the test light signal with a serving light received by the optical input interface 1, transmit them together on the serving fiber optic link to be detected via the optical output interface 3; and to receive, from the serving fiber optic link to be detected, the backward Rayleigh scattered light signal and the reflected light signal generated from the test light signal, and separate the backward Rayleigh scattered light signal and the reflected light signal from the serving light;
the test light reception unit 5 is configured to receive, from the optical assembly, the backward Rayleigh scattered light signal and the reflected light signal, and convert received light signals to digital signals;

The data processing unit 6 is further configured to analyze the digital signals converted by the test light reception unit 5, the data processing unit 6 can count and process received digital signals using an averaging algorithm and a sequence algorithm, thereby lowering a Root Mean Square (RMS) level value of a noise received by a system and increasing a dynamic detection range of the OTDR optical path detection device; and an analysis result is reported to a management system via the micro control unit 7 and the communication interface unit 9.
the micro control unit 7 is configured to control operation of circuits of other units in the optical transceiver processing module;
the power supply unit 8 is configured to supply electricity to circuits of all units in the optical transceiver processing module.

In the embodiment, the OTDR technique is combined with an optical transport equipment, thus the formed OTDR optical path detection device can be taken as an integral optical transmission/reception module (the OTDR optical path detection device is referred to as integral optical transmission/reception module for short) dedicated to OTDR optical path detection, and can be fixed in a serving fiber optic network to be detected. This solution will replace the existing solution based on an external OTDR meter, hold a measurement accuracy in the prior art to the most extent and overcome disadvantages of the external OTDR meter, the device, thereby having advantages such as having a low cost, small volume and a simple detection networking solution. The integral optical transmission/reception module dedicated to OTDR optical path detection has an OTDR detection function, thus the real-time detection of an optical link can be implemented by simply adding, to the exterior of an original optical transport equipment, an integral optical transmission/reception module dedicated to OTDR optical path detection, thereby achieving high efficient detection and maintenance of plenty of optical fibers.

The operation principle of the embodiment of the disclosure is as follows.

The integral optical transmission/reception module is connected with the serving optical fiber to be detected through the optical input interface 1 and the optical output interface 3. The integral optical transmission/reception module dedicated to OTDR optical path detection can be fixed at a node of the serving optical fiber to be detected. The serving light transmitted over the optical fiber will not be affected when passing the integral optical transmission/reception module.

The test light transmission unit 4 of the integral optical transmission/reception module transmits firstly a pulse-sequence or monopulse test light signal with a wavelength range from 1625 nm to 1675 nm, the test light signal is combined with the serving light after passing the optical assembly 2, and the combined light is output through the optical output interface 3 to the serving fiber optic network to be detected.

In the serving fiber optic network to be detected, the test light signal may generate a backward Rayleigh scattered light signal and a reflected light signal. The backward Rayleigh scattered light signal and the reflected signal will return to the optical output interface 3, and be separated from the serving light after passing the optical assembly 2, then be received by the test light reception unit 5 and be amplified and converted; the test light reception unit 5 can only receive backward scattered light and reflected light generated from the test light, and converts received optical signals to digital signals that are output to the data processing unit 6. The data processing unit 6 analyzes the converted digital signals, and delivers an analysis result to the micro control unit 7 that reports, through the communication interface unit 9, the analysis result to a management system.

The integral optical transmission/reception module according to the embodiment can be applied to a passive optical network, and can also be applied to an optical transport network, and the two application scenarios will be elaborated below.

As shown in Fig. 2, it is a structural diagram of the integral optical transmission/reception module dedicated to OTDR optical path detection, which is applied in a Passive Optical Network (PON). An optical input interface 1 of the integral optical transmission/reception module 11 dedicated to OTDR optical path detection is connected with an optical fiber of an output of an OLT equipment 10, an optical output interface 3 is connected to an end of a serving fiber optic network to be detected where there is provided an optical splitter 12 and several Optical Network Unit (ONU) 13 connected to the optical splitter 12, there is a backbone optical fiber between the optical splitter 12 and the OLT equipment 10 and there is a branch optical fiber between the optical splitter 12 and the ONU 13. The test light output from the integral optical transmission/reception module 11 is input through the optical output interface 3 to the serving fiber optic network to be detected, and detection of the backbone optical fiber and the branch optical fiber at the ONU can be implemented if the integral optical transmission/reception module 11 operates normally.

As shown in Fig. 3, it is a structural diagram of the integral optical transmission/reception module dedicated to OTDR optical path detection, which is applied in an Optical Transport Network (OTN). The integral optical transmission/reception module 11 dedicated to OTDR optical path detection is connected between OTN equipments 15 and 16, an optical input interface 1 of the integral optical transmission/reception module 11 is connected with an optical fiber of an output of the OTN equipment 15, and an optical output interface 3 is connected with an end of the serving fiber optic network to be detected. The test light output from the integral optical transmission/reception module 11 is input through the optical output interface 3 to the serving fiber optic to be detected, and detection of a serving optical fiber in the OTN network can be implemented if the integral optical transmission/reception module 11 operates normally.

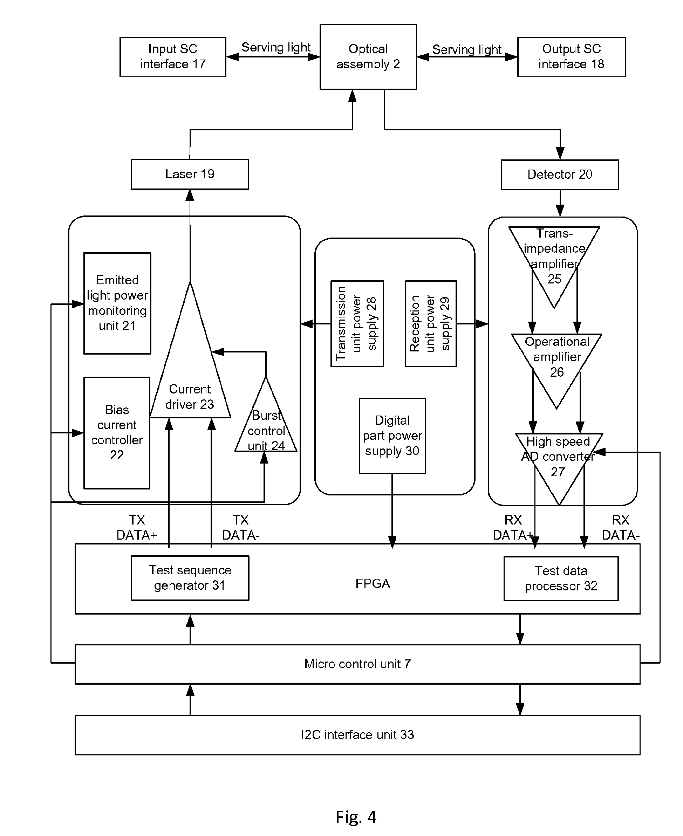

As shown in Fig. 4, it is a schematic circuit diagram of an integral optical transmission/reception module dedicated to OTDR optical path detection according to the embodiment. The integral optical transmission/reception module 11 is fixed in the serving fiber optic network to be detected through an input SC interface 17 and an output SC interface 18, the integral optical transmission/reception module 11 firstly controls, through a micro control unit 7, a test sequence generator 31 to generate a pulse-sequence electric signal having pulses in a hundred thousand order, then a current driver 23 converts the pulse-sequence electric signal to a modulated current signal, a bias current controller 22 controls the current driver 23 to generate a proper bias current, finally the bias current and the modulated current drives a laser 19 to emit a test light signal having a wavelength of 1625 nm to 1675 nm, the emission power of the test light signal is controlled by an emitted light power monitoring unit 21, and a burst control unit 24 is also provided in the circuit.

The emitted test light signal is output via the optical assembly 2 from the output SC interface 18 to the serving fiber optic network to be detected. In the serving fiber optic network to be detected, the backward Rayleigh scattered light signal and the Fresnel reflected light signal generated from the test light signal will return to the output SC interface 18. After passing the optical assembly 2, returned light signals are separated from the serving light, with a part of them being received by a reception end of a detector 20 and other part being completely absorbed by filtering devices of the optical assembly 2.

Received light signals are converted to current signals after passing the detector 20. A trans-impedance amplifier 25 converts the current signals to small differential voltage signals. Then an operational amplifier 26 amplifies amplitudes of the small differential voltage signals, amplified voltage signals are sampled and converted to digital signals by a high speed analog-to-digital converter 27.

The data processing unit 6 in Fig. 1 can be replaced by an Field Programmable Gate Array (FPGA), a test data processor 32 in the FPGA can perform data analysis and statistical processing on the digital signals.

After backward Rayleigh scattered light and reflected light generated from each monopulse light signal are processed and analyzed by the test light reception unit 5 and the data processing unit 6, a corresponding OTDR time-domain response detection curve will be generated, and a pulse-sequence light signal having pulses in a hundred thousand order will generate corresponding hundred thousand OTDR time-domain response detection curves. The data processing unit 6 analyzes statistically all data of the detection curves through an averaging algorithm and a sequence algorithm, thereby lowering RMS level values of received noises and increasing a dynamic detection range of OTDR detection of the integral optical transmission/reception module. The FPGA reports statistically analyzed data of the OTDR time-domain response curves to the micro control unit 7.

The power supply unit 8 includes a transmission unit power supply 28, a reception unit power supply 29 and a digital part power supply 30 used respectively to provide operational voltages to the test light transmission unit 4, the test light reception unit 5, a data processing unit 6 and the micro control unit 7.

The communication interface unit 9 in Fig. 7 can be replaced by an I2C interface unit 33 in Fig. 4. The management system manages, controls and performs data communication with the integral optical transmission/reception module 11 through the I2C interface unit 33.

The integral optical transmission/reception module dedicated to OTDR optical path detection according to embodiments of the disclosure integrate a detection light transmission function, a scattered light and reflected light reception function, a detected data processing function and a unit control function, thus can detect a fiber optic network to be detected without affecting normal transmission of the serving light.

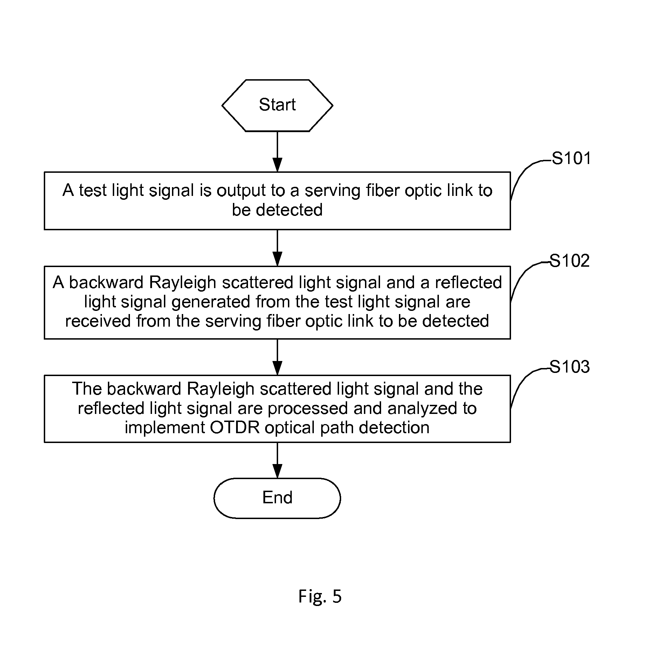

As shown in Fig. 5, an embodiment of the disclosure provides an OTDR optical path detection method implemented by the aforementioned OTDR optical path detection device, and the method includes:
step S101, a test light signal is output to a serving fiber optic link to be detected;
the step specifically includes: a monopulse or pulse-sequence test electric signal is generated, the test electric signal is converted to a test light signal having a constant optical power, and the test light signal is output to an optical assembly that, after combing the test light signal with a serving light, transmits them together on the serving fiber optic link to be detected.

Step S102, a backward Rayleigh scattered light signal and a reflected light signal generated from the test light signal are received from the serving fiber optic link to be detected;
specifically, the optical assembly receives, from the serving fiber optic link to be detected, the backward Rayleigh scattered light signal and the reflected light signal generated from the test light signal, and separates the backward Rayleigh scattered light signal and the reflected light signal from the serving light.
step S103, the backward Rayleigh scattered light signal and the reflected light signal are processed and analyzed to implement OTDR optical path detection.
the backward Rayleigh scattered light signal and the reflected light signal output from the optical assembly are converted to digital signals; the digital signals after the conversion are analyzed, and an analysis result is reported to a management system.

The operation principle of the embodiment of the disclosure is as follows.

The integral optical transmission/reception module dedicated to OTDR optical path detection is connected with the serving optical fiber to be detected through the optical input interface and the optical output interface. The integral optical transmission/reception module can be fixed at a node of the serving optical fiber to be detected. The serving light transmitted over the optical fiber will not be affected when passing the integral optical transmission/reception module.

The test light transmission unit of the integral optical transmission/reception module transmits firstly a pulse-sequence or monopulse test light signal with a wavelength range from 1625nm to 1675nm, the test light signal is combined with the serving light after passing the optical assembly of the integral optical transmission/reception module, and the combined light is output through the optical output interface to the serving fiber optic network to be detected.

In the serving fiber optic network to be detected, the test light signal may generate a backward Rayleigh scattered light signal and a reflected light signal. The backward Rayleigh scattered light signal and the reflected signal will return to the optical output interface, and be separated from the serving light after passing the optical assembly, then be received by the test light reception unit in the integral optical transmission/reception module and be amplified and converted; the test light reception unit can only receive backward scattered light and reflected light generated from the test light, and converts received optical signals to digital signals that are output to the data processing unit. The data processing unit analyzes the converted digital signals, and delivers an analysis result to the micro control unit in the integral optical transmission/reception module, which reports, through the communication interface unit in the integral optical transmission/reception module, the analysis result to a management system.

The method according to the embodiment can be applied in an passive optical network and can also be applied in an optical transport network, for specific application scenarios, refer to aforementioned embodiments of the device and detailed description thereof will be omitted.

For the circuit principle of a device related to the method of the embodiment, refer to above embodiments, and detailed description thereof will be omitted.

The OTDR optical path detection device and method provided by embodiments of the disclosure integrate a detection light transmission function, a scattered light and reflected light reception function, a detected data processing function and a unit control function. A fiber optic network to be detected can be detected in real time through fixing the integral optical transmission/reception device in a fiber optic network to be detected, and the normal transmission of serving light is not affected, thus a specialized OTDR meter for fiber optic detection and related testing devices are no longer needed, thereby simplifying steps for optical fiber failure detection and lowering complexity of optical network maintenance and corresponding cost.

What described are merely preferable embodiments of the disclosure, and are not intended to limit the scope of protection of the disclosure. All equivalent structures and flow changes made using the specification and accompanying drawings of the disclosure, or direct or indirect applications of the disclosure to other related technical fields should be included within the scope of protection of the disclosure.

## Claims

1. An Optical Time Domain Reflectometer (OTDR) optical path detection device, comprising an optical input interface, an optical output interface and an optical transceiver processing module, wherein
the optical input interface and the optical output interface are configured to fix the device in a serving fiber optic link to be detected, wherein the optical output interface is connected with one end of a serving fiber optic network to be detected; and
the optical transceiver processing module is configured to output, through the optical output interface, a test light signal to the serving fiber optic link to be detected; to receive, from the serving fiber optic link to be detected, a backward Rayleigh scattered light signal and a reflected light signal generated from the test light signal; and to process and analyze the backward Rayleigh scattered light signal and the reflected light signal so as to implement OTDR optical path detection.

2. The device according to claim 1, wherein the optical transceiver processing module comprises a test light transmission unit, an optical assembly, a test light reception unit and a data processing unit, wherein
the data processing unit is configured to generate a monopulse or pulse-sequence test electric signal;
the test light transmission unit is configured to convert the test electric signal to a test light signal having a constant optical power, and output the test light signal to the optical assembly;
the optical assembly is configured to, after combing the test light signal with a serving light received by the optical input interface, transmit them together on the serving fiber optic link to be detected via the optical output interface; and to receive, from the serving fiber optic link to be detected, the backward Rayleigh scattered light signal and the reflected light signal generated from the test light signal, and separate the backward Rayleigh scattered light signal and the reflected light signal from the serving light;
the test light reception unit is configured to receive, from the optical assembly, the backward Rayleigh scattered light signal and the reflected light signal, and convert received light signals to digital signals; and
the data processing unit is further configured to analyze the digital signals converted by the test light reception unit so as to implement OTDR optical path detection.

3. The device according to claim 2, wherein a monopulse or pulse-sequence test light signal generated by the test light transmission unit has a wavelength range from 1625 nm to 1675 nm.

4. The device according to claim 2, wherein the way by which the data processing unit analyzes the digital signals processed by the test light reception unit comprises at least an averaging algorithm and a sequence algorithm.

5. The device according to claim 2, wherein the optical transceiver processing module further comprises a micro control unit, a power supply unit and a communication interface unit, wherein
the micro control unit is configured to control operation of circuits of other units in the optical transceiver processing module;
the data processing unit is further configured to report an analysis result to a management system via the micro control unit and the communication interface unit; and
the power supply unit is configured to supply electricity to circuits of all units in the optical transceiver processing module.

6. The device according to any one of claims 1 to 5, wherein the device is applied to a passive optical network, the optical input interface is connected with an optical fiber of an output of an Optical Line Terminal (OLT) equipment, and the optical output interface is connected with one end of the serving fiber optic network to be detected.

7. The device according to any one of claims 1 to 5, wherein the device is applied to an Optical Transport Network (OTN), the optical input interface is connected with an optical fiber of an output of an OTN equipment, and the optical output interface is connected with one end of the serving fiber optic network to be detected.

8. An Optical Time Domain Reflectometer (OTDR) optical path detection method, comprising:
outputting a test light signal to a serving fiber optic link to be detected;
a backward Rayleigh scattered light signal and a reflected light signal generated from the test light signal are received from the serving fiber optic link to be detected; and
the backward Rayleigh scattered light signal and the reflected light signal are processed and analyzed to implement OTDR optical path detection.

9. The method according to claim 8, wherein the outputting a test light signal to a serving fiber optic link to be detected comprises:
generating a monopulse or pulse-sequence test electric signal;
converting the test electric signal to a test light signal having a constant optical power, and outputting the test light signal to an optical assembly that, after combing the test light signal with a serving light, transmits them together on the serving fiber optic link to be detected.

10. The method according to claim 9, wherein the receiving, from the serving fiber optic link to be detected, a backward Rayleigh scattered light signal and a reflected light signal generated from the test light signal comprises:
the optical assembly receives, from the serving fiber optic link to be detected, the backward Rayleigh scattered light signal and the reflected light signal generated from the test light signal, and separates the backward Rayleigh scattered light signal and the reflected light signal from the serving light.

11. The method according to claim 10, wherein the processing and analyzing the backward Rayleigh scattered light signal and the reflected light signal so as to implement OTDR optical path detection comprise:
the backward Rayleigh scattered light signal and the reflected light signal output from the optical assembly are converted to digital signals; and
analyzing the digital signals after the conversion.

12. The method according to any one of claims 8 to 11, further comprising:
reporting an analysis result to a management system.
